(19) Europäisches Patentamt
European Patent Office
Office européen des brevets

(11) **EP 1 883 199 B1**

(12) **FASCICULE DE BREVET EUROPEEN**

(45) Date de publication et mention
de la délivrance du brevet:
**04.11.2009 Bulletin 2009/45**

(51) Int Cl.:
***H04W 12/06*** *(2009.01)*

(21) Numéro de dépôt: **07013875.5**

(22) Date de dépôt: **16.07.2007**

(54) **Procédé de contrôle de l'accès d'une station mobile à une station de base**

Steuerungsverfahren für den Zugang einer mobilen Station zu einer Basisstation

Method for controlling the access of a mobile station to a base station

(84) Etats contractants désignés:
**DE ES FR GB IT**

(30) Priorité: **24.07.2006 FR 0606777**

(43) Date de publication de la demande:
**30.01.2008 Bulletin 2008/05**

(73) Titulaire: **SAGEM COMMUNICATIONS**
**92848 Rueil Malmaison Cedex (FR)**

(72) Inventeur: **Dorion-Cousinat, Marc**
**75015 Paris (FR)**

(74) Mandataire: **Maillet, Alain et al**
**Cabinet LE GUEN MAILLET**
**5, place Newquay**
**BP 70250**
**35802 Dinard Cedex (FR)**

(56) Documents cités:
**WO-A-02/13568    WO-A-98/49855**

## Description

La présente invention concerne un procédé de contrôle de l'accès d'une station mobile à une station de base dont la couverture définit une des cellules d'un système de téléphonie cellulaire mobile du type où une approche par défi est utilisée pour assurer à ladite station mobile que ladite station de base sous la couverture de laquelle elle se trouve appartient audit système. Elle concerne également une station de base d'un système de téléphonie cellulaire mobile mettant en oeuvre un tel procédé et un programme d'ordinateur dont les instructions sont destinées à être exécutées par ladite station de base pour mettre en oeuvre ledit procédé.

Une cellule du réseau cellulaire d'un système de téléphonie cellulaire mobile est définie comme étant la couverture d'une zone géographique dont l'étendue est déterminée selon les capacités de la station de base. Les capacités d'une station de base s'expriment en outre en terme de puissance qui limite l'étendue de la cellule et en terme de connectivité, c'est-à-dire de bande passante qui limite le nombre de connexions simultanées de la station de base avec des stations mobiles. Cette limitation de capacité est volontaire pour notamment éviter que la station de base relative à une cellule ne vienne perturber le fonctionnement des autres stations de base du système de téléphonie.

Une cellule est, le plus souvent, utilisée afin d'améliorer la couverture du réseau cellulaire sur une zone géographique particulière. Par exemple, elle peut être utilisée pour améliorer l'accès à ce réseau de téléphonie dans un bâtiment qui ne serait pas bien couvert par une autre cellule du système cellulaire pour des raisons multiples (configuration architecturale du bâtiment, localisation du bâtiment en bordure de cellule, etc.). Mais une cellule peut également être utilisée à d'autres fins et notamment, lorsque son étendue est limitée à quelques centaines de mètres, pour l'établissement d'une facturation différente selon qu'un abonné accède au système de téléphonie cellulaire mobile lorsqu'il se trouve dans une zone géographique couverte par une cellule à étendue importante, typiquement quelques kilomètres, ou dans une zone géographique couverte par une cellule à étendue limitée, par exemple son domicile personnel. En effet, lorsque cet abonné souhaite accéder à un tel système de téléphonie au travers d'une station mobile (téléphone et autre) son abonnement, souscrit auprès d'un opérateur, fixe, de manière classique, le coût de la communication lorsque cet usager accède à ce système de téléphonie à partir d'une station de base déterminant une cellule à étendue importante de ce système. Par contre, dès qu'il se trouve dans une zone géographique couverte par une cellule à étendue limitée, par exemple lorsque la station de base qui détermine cette cellule est installée chez lui, et qu'il souhaite accéder à nouveau à ce système de téléphonie, la station mobile qu'il utilise détecte qu'elle se situe sous la couverture de la cellule à étendue limitée et accède au système de téléphonie via la station de base qui détermine cette cellule. L'opérateur peut alors définir une tarification différente et en particulier une tarification moins élevée lorsque cet utilisateur accède au système de téléphonie cellulaire à partir de chez lui.

Dans ce type d'applications, il est donc nécessaire de contrôler l'accès d'une station mobile à chaque station de base du système de téléphonie cellulaire mobile. Ce contrôle d'accès permettrait, d'une part, d'interdire l'accès d'une station mobile à cette station de base dès lors que le nombre maximal de stations mobiles que cette station de base peut accueillir est atteint et, d'autre part, dans le cas par exemple d'une application de tarification différente, de n'autoriser l'accès à cette station de base qu'aux usagers qui y ont été préalablement autorisés. Une telle autorisation peut, par exemple être accordée par un opérateur du système de téléphonie cellulaire mobile.

Il est connu qu'une station de base d'un système de téléphonie cellulaire mobile, intègre des moyens pour filtrer les usagers demandant d'accéder à cette station de base.

En effet, il est connu qu'une cellule d'un système de téléphonie mobile peut-être barrée, c'est-à-dire que tout usager est interdit d'accéder au réseau via la station de base qui détermine une telle cellule. Ce type de filtrage est trop restrictif car aucun usager ne peut alors accéder au système de téléphonie cellulaire mobile à partir d'une telle station de base..

Il est également connu des moyens de filtrage qui basent leur décision d'autorisation d'accès sur la capacité qu'a la station de base d'accueillir un nouvel usager selon les ressources disponibles de cette station de base. Cependant, ces moyens de filtrage ne permettent pas de différencier les usagers qui ont au préalable obtenu une autorisation d'accès de ceux qui ne l'ont pas obtenue. En d'autres termes, la décision d'autorisation d'accès se base sur les ressources disponibles de la station de base et non sur l'identité de ces usagers (se référer par exemple à la norme 3GPP 25.304 §5.3.1.1.2).

De plus, il est connu des moyens de filtrage qui basent leur décision d'autorisation d'accès sur l'autorisation qu'a un usager d'accéder à une zone géographique particulière, appelée zone de localisation. On rappelle qu'une zone de localisation est définie par un ensemble d'au moins une cellule. Ainsi, en autorisant un usager à accéder à une zone de localisation particulière, le contrôle de l'accès à une cellule particulière de cette zone de localisation est bien basé sur l'identité de l'usager. Cependant, l'utilisation d'une zone de localisation ne permet pas d'obtenir une granularité suffisante du contrôle d'accès selon la présente invention qui doit se faire au niveau de la cellule. En effet, il est souhaité qu'un usager puisse être autorisé à accéder au système de téléphonie cellulaire mobile via une seule station de base particulière et d'interdire l'accès via les autres stations de base du système, que ces stations de base appartiennent à la même zone de localisation ou à une autre zone de localisation. Ceci n'est pas le cas lorsque la décision d'accès est basée sur l'autorisation donnée à un usager pour accéder à une zone de localisation particulière lorsque cette zone de localisation est définie par plusieurs cellules. De plus, dans le cas où chaque zone de localisation serait définie par une seule cellule du système de téléphonie cellulaire, le nombre de zones de localisation devrait être très important voir illimité notamment dans le cas du déploiement à grande échelle d'une application à tarification différente selon la cellule sous la couverture de laquelle se trouve l'usager au moment de sa demande d'accès au système. Ainsi, en définissant une zone de localisation par cellule, le nombre de zones de localisation distinctes doit être illimité alors que selon les normes actuelles de téléphonie cellulaire mobile (3GPP 23.0.0.3 §4.1), le nombre de zones de localisation est limitée à 65534 rendant le déploiement d'une application à tarification différente à grande échelle impossible.

Quels qu'ils soient, les moyens de filtrage connus à ce jour, ne permettent donc pas de contrôler l'accès d'une station mobile à un système de téléphonie cellulaire mobile via une station de base dont la couverture définit une cellule selon l'identité de l'usager utilisant ladite station mobile et d'interdire l'accès de cette station mobile uniquement à cette station de base dans le cas où l'usager n'aurait pas obtenu au préalable l'autorisation d'accéder à cette station de base.

Le problème résolu par la présente invention est donc de prévoir un procédé de contrôle de l'accès d'une station mobile à un système de téléphonie cellulaire mobile via une station de base de ce système.

A cet effet, l'inventeur a observé que l'approche par défi, utilisée par la plupart des systèmes de téléphonie cellulaire mobile de dernière génération pour assurer, notamment, à une station mobile que la station de base sous la couverture de laquelle elle se trouve appartient au système de téléphonie, peut-être complétée pour résoudre avantageusement le problème exposé ci-dessus.

Une approche par défi est une approche générale qui permet à une entité d'un système de lancer un défi à une autre entité de ce système dans le but, par exemple de valider une hypothèse relative à une propriété de l'une ou l'autre des deux entités.

Dans le cas d'un système de téléphonie cellulaire mobile basé, par exemple sur les normes UMTS (Universal Mobile Telecommunication System), l'approche par défi est utilisée, notamment, pour assurer à une station mobile que la station de base sous la couverture de laquelle elle se trouve appartient audit système. Pour cela, l'approche par défi consiste au lancement d'un défi par une entité réseau dudit système vers ladite station mobile, ledit défi étant pour ladite station mobile de calculer un résultat, dit supposé du défi, à partir d'une information, dite d'authentification, émise par ladite entité réseau et d'une information, dite secrète, connue au préalable par ladite station mobile. Ledit défi est alors réussi par ladite station mobile lorsque le résultat supposé du défi est identique au résultat du défi calculé par une entité réseau dudit système à partir de ladite information d'authentification et d'une information secrète connue au préalable de ladite entité réseau responsable du calcul dudit résultat du défi.

La demande de brevet internationale WO 98/49855 décrit également une telle approche par défi pour l'authentification d'une station mobile auprès d'un réseau qui est basée sur la vérification d'un couple de clés généré à partir d'une information d'authentification de la station mobile et d'un nombre aléatoire échangé.

La présente invention concerne un procédé de contrôle de l'accès d'une station mobile à une station de base d'un système de téléphonie cellulaire mobile du type où ladite approche par défi est mise en oeuvre par ce système. Ledit procédé est caractérisé en ce qu'il comporte en outre une étape de création au cours de ladite approche par défi d'une information d'authentification dite faussée qui est définie afin de faire échouer ladite approche par défi dès lors que l'usager utilisant ladite station mobile pour accéder au système de téléphonie cellulaire mobile n'est pas autorisé à le faire via ladite station de base.

Ainsi, l'autorisation de l'accès d'une station mobile à une station de base du système de téléphonie cellulaire mobile est donc, d'une part, contrôlée selon l'identité de l'usager qui utilise ladite station mobile et, d'autre part, déterminée de manière à ce qu'une décision d'interdiction d'accès d'une station mobile utilisée par un usager à une station de base particulière n'a aucune incidence sur les décisions d'autorisation ou d'interdiction d'accès à d'autres stations de base de ce système de téléphonie cellulaire mobile, que ces stations mobiles déterminent des cellules qui appartiennent ou pas à une même zone de localisation.

De plus, cette solution est avantageuse car elle n'a aucun impact sur le fonctionnement connu du système de téléphonie cellulaire mobile actuel. Elle peut donc être ajoutée à un système de téléphonie déjà en service.

Cette solution est également avantageuse car elle est facilement mise en oeuvre du fait de son caractère décentralisé et de son indépendance de décisions d'autorisation/interdiction prises à l'égard des différents usagers.

Selon un mode de réalisation de la présente invention, un identifiant unique étant associé à chaque usager susceptible d'accéder à ladite station de base, le procédé comporte une étape, préalable à ladite étape de création, d'obtention de l'identifiant de l'usager utilisant ladite station mobile pour accéder audit système via ladite station de base.

Selon un mode de réalisation de ladite étape d'obtention de l'identifiant de l'usager, ledit identifiant est obtenu suite à l'émission par ladite station mobile d'une requête d'exécution de ladite approche par défi.

Selon un autre mode de réalisation de ladite étape d'obtention de l'identifiant de l'usager, ledit identifiant est obtenu suite à l'émission par ladite entité réseau d'une information d'authentification.

Selon un mode de réalisation de ladite étape de création, au cours de ladite étape de création, ladite information d'authentification faussée est créée indépendamment de l'information d'authentification émise par ladite entité réseau.

Selon un autre mode de réalisation de ladite étape de création, ladite information d'authentification faussée est créée par modification de l'information d'authentification émise par ladite entité réseau.

Un identifiant unique étant associé à chaque usager susceptible d'accéder à ladite station de base, ladite étape de création comporte alors, selon un mode de réalisation :

- une sous-étape d'obtention d'une liste d'identifiants des usagers qui sont autorisés à accéder au système de téléphonie via ladite station de base,
- une sous-étape de comparaison entre l'identifiant de l'usager ainsi reçu et chaque identifiant de ladite liste,
- dans le cas où l'identifiant de l'usager ainsi reçu serait différent de chacun des identifiants de ladite liste, une sous-étape de modification de l'information d'authentification émise par ladite entité réseau.

Selon un mode de réalisation de la présente invention, ladite information d'authentification étant constituée d'au moins deux composantes, au cours de ladite sous-étape de modification au moins l'une desdites composantes est modifiée.

Selon un mode de réalisation de la présente invention, l'une des composantes de ladite information d'authentification est un code d'authentification et une autre des composantes de ladite information d'authentification est un nombre aléatoire.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un schéma synoptique d'un exemple d'un système de téléphonie cellulaire mobile basé sur les normes UMTS,
la Fig. 2 représente un diagramme temporel qui illustre les différentes étapes de l'approche par défi mis en oeuvre par le système de téléphonie cellulaire mobile SYST,
la Fig. 3 représente un exemple d'un vecteur d'authentification,
la Fig. 4 représente un diagramme qui illustre la création d'un vecteur d'authentification relatif à un usager particulier,
la Fig. 5 représente un diagramme des étapes du procédé de contrôle de l'accès d'une station mobile à une station de base selon la présente invention, et
la Fig. 6 représente un schéma synoptique d'un mode de réalisation d'une station de base mettant en oeuvre le procédé dé contrôle d'accès décrit à la Fig. 5.

Il est maintenant décrit un mode de réalisation de la présente invention dans le cas d'un système de téléphonie cellulaire mobile basé sur les normes UMTS et plus précisément sur la norme 3GPP TS 33.102.

Cependant, l'invention ne se limite pas à ce type de système qui peut être étendu à tout système de téléphonie cellulaire mobile qui met en oeuvre une approche par défi pour assurer à une station mobile que la station de base sous la couverture de laquelle elle se trouve appartient audit système.

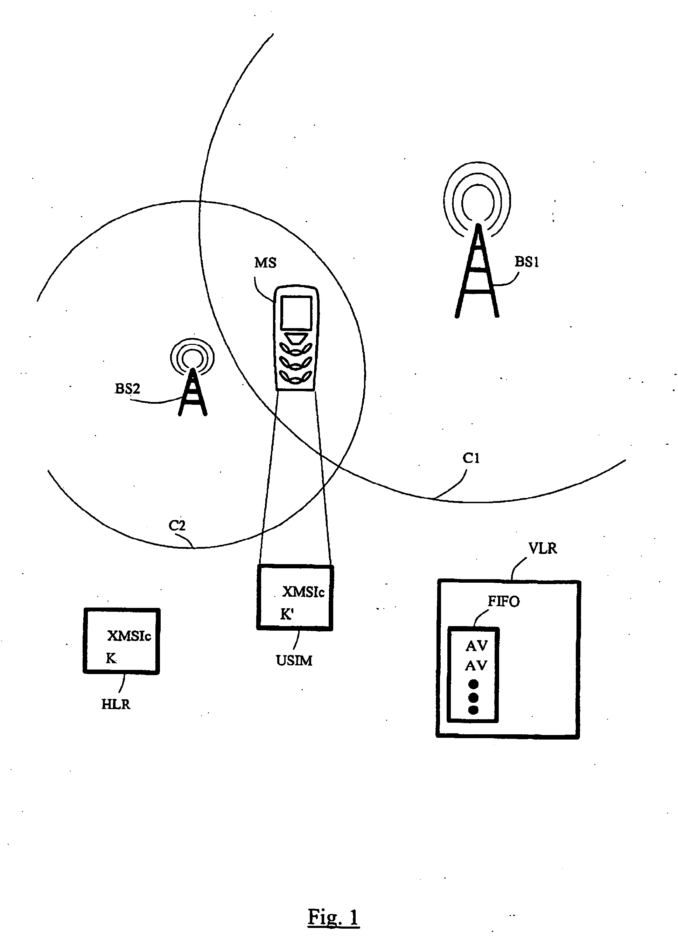

La Fig. 1 représente un schéma synoptique d'un exemple d'un système de téléphonie cellulaire mobile basé sur les normes UMTS. Le système SYST comporte une entité réseau responsable de l'authentification de cellule que nous appellerons par la suite entité réseau HLR (Home Location Register) qui mémorise entre autre un identifiant unique de l'usager appelé par la suite XMSIc. Cet identifiant XMSIc est, par exemple l'identité IMSI (International Mobile Subscriber Identity) de l'usager ou l'identité temporaire TMSI (Temporary Mobile Subscriber Identity) de cet usager. Le système SYST comporte également une station de base BS1 qui détermine une cellule C1 dont l'étendue est représentée par un cercle centré sur la station de base BS1, une autre station de base BS2 qui détermine une cellule C2 et une station mobile MS qui se trouve sous la couverture à la fois de la cellule C1 et de la cellule C2. On peut noter que le cas où la station mobile MS serait uniquement sous la couverture de la cellule C2 est un cas dégénéré de l'exemple de la Fig. 1.

Le système SYST comporte également une entité appelée par la suite entité VLR (Visitor Location Register) qui est responsable entre autre de la localisation de la station mobile MS dans le système de téléphonie cellulaire SYST. De plus, l'entité réseau VLR comporte une pile de type FIFO (First In First Out, premier entré premier sorti) dont on verra l'usage par la suite.

La station mobile MS, utilisée par un usager, est équipée d'une carte USIM (Universal Subscriber Identity Module) sur laquelle sont mémorisées les informations relatives à l'abonnement que cet usager a souscrit auprès d'un opérateur du système de téléphonie cellulaire mobile SYST afin de pouvoir accéder au système SYST. En particulier, la carte USIM mémorise l'identifiant XMSIc de l'usager ainsi qu'une information secrète K'.

L'usager qui utilise la station mobile MS souhaite accéder au réseau de téléphonie cellulaire mobile SYST via la station de base BS2.

Pour cela, la station mobile MS détecte qu'elle se trouve à la fois sous la couverture de la cellule C1 et de la cellule C2 selon l'exemple de la Fig. 1. Il est connu que la station mobile MS est adaptée pour déterminer la station de base la plus favorable afin d'établir le dialogue entre la station mobile MS et le système de téléphonie cellulaire mobile SYST. La station de base est sélectionnée selon des critères prédéterminés qui, le plus souvent, déterminent que la station de base retenue est la station de base la plus proche de la station mobile MS, en l'occurrence la station de base BS2 à la Fig. 1.

Une fois que la station mobile MS a déterminé que la station de base BS2 était la station de base la plus favorable, la station mobile MS obtient l'identifiant XMSIc à partir de la carte USIM et émet une requête d'exécution de l'approche par défi mis en oeuvre par le système SYST pour assurer à la station mobile MS que la station de base BS2 appartient au système SYST.

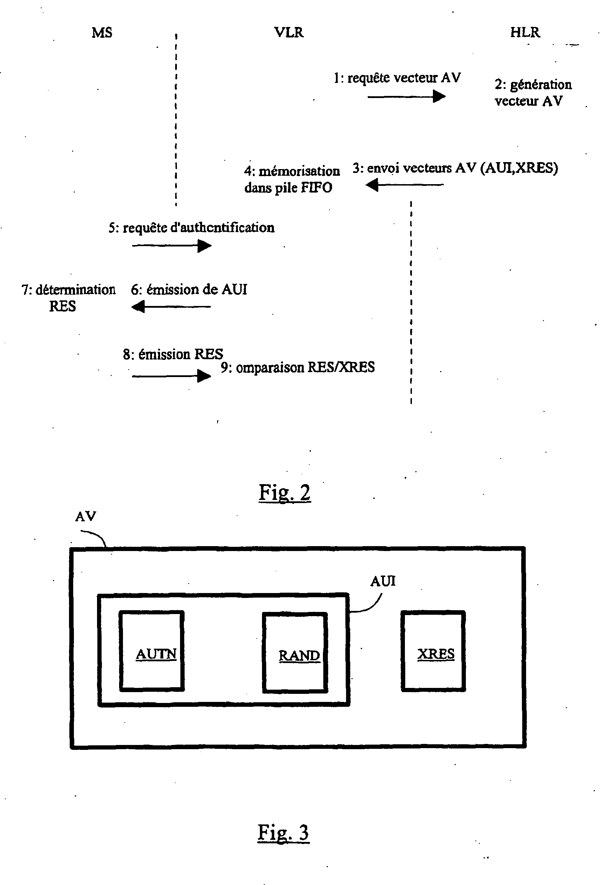

Selon les normes UMTS, cette requête, qui comporte l'identité XMSIc, est émise vers l'entité réseau VLR via la station de base BS2. Suite à la réception de cette requête et vérification de l'identifiant XMSIc avec l'un des identifiants d'usager mémorisés par l'entité réseau HLR, l'entité réseau VLR initie l'approche par défi décrite en relation avec la Fig. 2.

La Fig. 2 représente un diagramme temporel qui illustre les différentes étapes de l'approche par défi mise en oeuvre par le système de téléphonie cellulaire mobile SYST.

Selon les normes UMTS, cette approche par défi est basée, d'une part, sur la connaissance partagée entre l'entité réseau HLR et la station mobile BS2 d'une information secrète et, d'autre part, sur l'émission d'une information d'authentification AUI de la station de base RS2.

On peut noter que cette approche par défi permet également, d'une part, d'authentifier l'usager vis-à-vis du système (authentification réciproque entre système et usager) et, d'autre part, de déterminer des clés de chiffrage et d'intégrité qui seront connues de la station de base BS2 et de la station mobile MS. Ces aspects de cette approche par défi ne sont toutefois pas plus détaillés ici car ils ne font pas partie de l'invention, qui, rappelons-le consiste à prévoir un procédé de contrôle de l'accès d'une station mobile à une station de base d'un système de téléphonie cellulaire mobile.

L'approche par défi mise en oeuvre par le système de téléphonie cellulaire mobile SYST peut se diviser en deux phases. La première d'entre elles se produit entre l'entité réseau HLR et l'entité réseau VLR et la seconde entre l'entité réseau VLR et la station mobile MS.

Selon la norme 3GPP TS 33.102 l'information d'authentification AUI est constituée d'un code d'authentification AUTN, et d'un nombre aléatoire RAND. Cette information d'authentification AUI est associée à une autre information, appelée par la suite résultat du défi XRES. Cette association est appelée par la suite vecteur d'authentification AV qui est représenté à la Fig. 3. Le vecteur d'authentification AV est issu de la pile de type FIFO de l'entité réseau VLR avec laquelle la station de base BS2 est associée de part son appartenance à la zone de localisation dont cette entité réseau VLR est responsable. Cette pile est utilisée pour que le vecteur d'authentification AV disponible soit un vecteur d'authentification qui a été généré récemment. En effet, la pile de type FIFO mémorise un ensemble de vecteurs d'authentification AV qui ont tous les mêmes effets mais qui se distinguent toutefois par leur date de création. Au fur et à mesure que l'entité réseau VLR est amenée à utiliser l'un des vecteurs d'authentification AV de sa pile de type FIFO, ce vecteur est supprimé de cette pile. De plus, lorsque la pile de type FIFO est vide, l'entité réseau VLR requiert auprès de l'entité réseau HLR un nouvel ensemble de vecteurs d'authentification AV. Cette requête est marquée 1 à la Fig. 2.

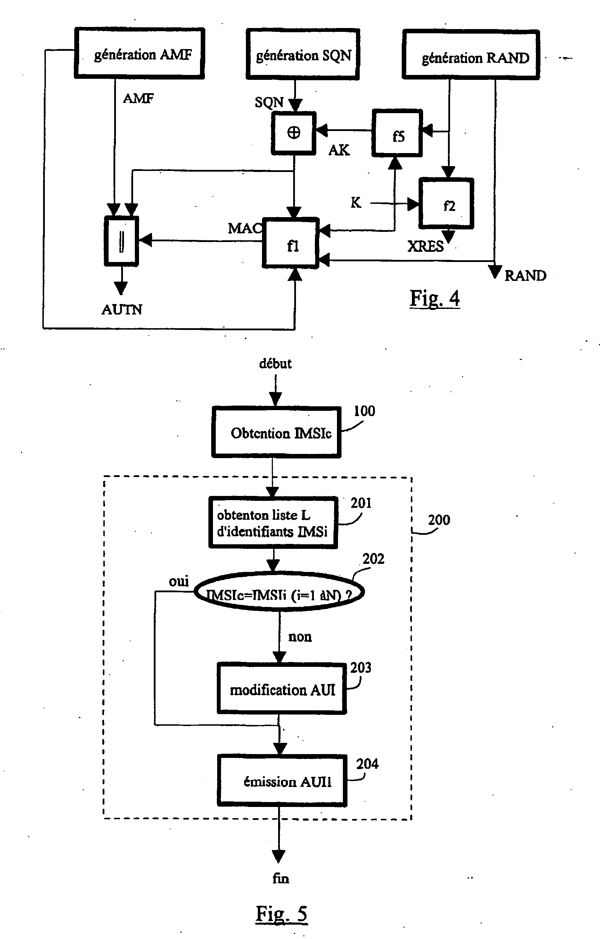

La Fig. 4 représente un diagramme qui illustre la création d'un vecteur d'authentification AV relatif à un usager particulier qui est, selon la norme 3GPP TS 33.102 V7.0.0 §6 constitué en outre du code d'authentification AUI, du nombre aléatoire RAND et d'un résultat du défi XRES. La création (ou génération) d'un vecteur AV est marquée 2 à la Fig. 2.

L'entité réseau HLR génère tout d'abord un numéro de séquence SQN propre à cet usager, le nombre aléatoire RAND et un champs AMF qui détermine les algorithmes utilisés pour la génération du code d'authentification et du résultat du défi XRES. De plus, l'entité réseau HLR obtient une information secrète K, encore appelée clé secrète, propre à cet usager qui est mémorisée dans l'une de ses mémoires.

L'entité réseau HLR calcule alors le code d'authentification AUTN selon la relation suivante :

$$AUTN = SQN \| AMF \| MAC$$

dans laquelle MAC désigne un code obtenu selon la relation suivante :

$$MAC = f1_k (SQN \| RAND \| AMF)$$

dans laquelle $f1_k$ désigne l'algorithme qui réalise une fonction d'authentification paramétrable dont les paramètres sont l'information secrète K, le numéro de séquence SQN, le nombre aléatoire RAND et le champs AMF. L'opérateur mathématique $\|$ désigne l'opérateur de concaténation. On peut noter que dans le cas où le numéro de séquence SQN contiendrait l'identifiant XSMIc de l'usager, ce numéro de séquence SQN est crypté à partir d'une clé dite d'anonymat AK donnée par

$$AK = f5_k (RAND)$$

dans laquelle $f5_k$ est un algorithme réalisant une fonction de génération de clé.

Le code d'authentification AUTN est alors donné par la relation suivante :

$$AUTN = SQN \oplus AK \| AMF \| MAC$$

dans laquelle l'opérateur mathématique ⊕ désigne l'opérateur logique XOR.

Enfin, l'entité réseau HLR détermine le résultat du défi XRES à partir de l'information secrète K et du nombre aléatoire RAND. Le résultat du défi XRES est en effet donné par

$$XRES = f2_k(RAND)$$

dans laquelle $f2_k$ est un algorithme réalisant une fonction de génération de défi.

L'entité réseau HLR ne se limite pas à calculer un seul vecteur d'authentification AV lorsque l'entité réseau VLR lui demande un vecteur d'authentification AV mais un ensemble de vecteurs d'authentification AV qui sont alors ordonnés selon leur numéro de séquence SQN.

L'entité réseau HLR émet l'ensemble ordonné de vecteurs d'authentification AV à destination de l'entité réseau VLR qui le mémorise dans sa pile de type FIFO. Ces étapes sont marquées respectivement 3 et 4 à la Fig. 2.

Lorsque l'entité réseau VLR initie une requête d'authentification (marquée 5 à la Fig. 2), par exemple par l'émission par la station mobile MS de l'identifiant XMSIc, l'entité réseau VLR sélectionne un vecteur d'authentification AV parmi l'ensemble des vecteurs d'authentification AV correspondant à l'identifiant XMSIc et émet l'information d'authentification AUI, en l'occurrence le code d'authentification AUTN et le nombre aléatoire RAND, à destination de la station mobile MS (étape marquée 6 à la Fig. 2).

La carte USIM de la station mobile MS vérifie alors si le code d'authentification AUTN peut être accepté et dans l'affirmative détermine une information, appelée résultat supposé du défi RES. Pour cela,

- la carte USIM calcule la clé d'anonymat AK=f5$_{k'}$ (RAND) (si elle est utilisée) et retrouve le numéro de séquence SQN=(SQN ⊕ AK) ⊕ AK à partir du nombre aléatoire RAND et d'une information secrète K' qui est mémorisée sur la carte USIM.
- la carte USIM calcule le code XMAC=f1$_{k'}$(SQN ‖ RAND‖ AMF) à partir notamment du champ AMF et du nombre aléatoire RAND reçus et compare le code XMAC avec le code MAC du code d'authentification AUTN reçu.
- Dans le cas où les codes XMAC et MAC sont différents, c'est-à-dire lorsque les informations secrètes K et K' sont différentes, la station mobile MS émet vers l'entité réseau VLR un message de rejet d'authentification utilisateur avec une indication de la cause du rejet et la procédure d'authentification est abandonnée. L'entité réseau VLR peut alors initier un rapport d'échec d'authentification vers l'entité réseau HLR et peut également décider d'initier une nouvelle procédure d'authentification.

- Dans le cas où les codes XMAC et MAC sont identiques, c'est-à-dire que les informations secrètes K et K' sont identiques, la carte USIM vérifie que le numéro de séquence SQN est toujours valide.
- Dans le cas où le numéro de séquence SQN n'est plus valide, la station mobile émet un message d'échec de synchronisation vers l'entité réseau VLR et la procédure est abandonnée.
- Dans le cas où le numéro de séquence est valide, la carte USIM détermine le résultat supposé du défi RES=f2$_{k'}$(RAND) (étape marquée 7 à la Fig. 2) et inclut ce résultat dans un message qui est alors émis à destination de l'entité réseau VLR (étape marquée 8 à la Fig. 2).

L'entité réseau VLR compare alors le résultat du défi XRES avec le résultat supposé du défi RES (étape 9 à la Fig. 2). Deux cas peuvent alors se produire selon le résultat de cette comparaison.

- Dans le cas où l'entité réseau VLR détermine que le résultat du défi XRES et le résultat supposé du défi RES sont identiques, le défi lancé par l'entité réseau VLR à la station mobile MS est réussi. Ceci se produit lorsque l'information secrète K mémorisée par l'entité réseau HLR et l'information secrète K' mémorisée sur la carte USIM de la station mobile MS sont identiques.
- Dans le cas où l'entité réseau VLR détermine que le résultat du défi XRES est différent du résultat supposé du défi RES, l'entité réseau VLR initie un rapport d'échec d'authentification à destination de l'entité réseau HLR. Le défi lancé par l'entité réseau VLR à la station mobile MS n'est alors pas réussi.

La Fig. 5 représente un diagramme des étapes du procédé de contrôle de l'accès de la station mobile MS à la station de base BS2 selon la présente invention.

Le système SYST de téléphonie cellulaire mobile est du type où l'approche par défi décrite précédemment est utilisée pour assurer à la station mobile MS que la station de base BS2 appartient au système SYST.

Comme on l'a expliqué précédemment, l'entité réseau VLR est à l'initiative de l'exécution de l'approche par défi en émettant à destination de la station mobile MS une information d'authentification AUI via la station de base BS2. Selon la présente invention, le procédé de contrôle de l'accès de la station mobile MS à la station de base BS2 est destiné à être exécuté soit de manière centralisée, c'est-à-dire par une entité du système SYST, soit de manière distribuée, c'est-à-dire par au moins deux entités réseau distinctes du système SYST, sous forme, par exemple d'instructions d'un programme d'ordinateur.

Ce procédé comporte en outre une étape 200 de création d'une information d'authentification AUI1, dite faussée qui est définie afin de faire échouer ladite approche par défi dès lors que l'usager utilisant la station mobile MS pour accéder au système de téléphonie cellulaire mobile SYST n'est pas autorisé à le faire via la station de base BS2. L'information d'authentification AUI1 est dite faussée pour indiquer que la station mobile MS ne peut, ou tout au moins peut mais avec une probabilité très faible, calculer un résultat supposé du défi RES qui soit identique au résultat du défi XRES.

Selon un mode de réalisation de la présente invention, chaque usager susceptible d'accéder au système SYST étant associé à un identifiant XMSIi, le procédé est caractérisé en ce qu'il comporte une étape 100, préalable à ladite étape de création, d'obtention de l'identifiant XMSI$_c$ de l'usager utilisant la station mobile MS pour accéder au système SYST via la station de base BS2.

Selon un premier mode de réalisation de l'étape 100, l'identifiant XMSIc de l'usager utilisant la station mobile MS pour accéder au système SYST est obtenu suite à l'émission dudit identifiant XMSIc par la station mobile MS.

Selon un deuxième mode de réalisation de l'étape 100, correspondant au cas où le numéro de séquence SQN de l'information d'authentification AUI comporte l'identifiant XMSIc, l'identifiant XMSIc est obtenu suite à l'émission de cette information d'authentification AUI.

Selon un mode de réalisation, au cours de ladite étape de création 200, l'information d'authentification faussée AUI1 est créée indépendamment de l'information d'authentification AUI émise par l'entité réseau VLR. Par exemple, l'information d'authentification faussée AUI1 peut être une information peut-être constituée d'un code d'authentification particulier généré à partir d'un numéro de séquence SQN nul et/ou un nombre aléatoire RAND également nul.

Selon un autre mode de réalisation, au cours de ladite étape de création 200, l'information d'authentification faussée AUI1 est créée par modification de l'information d'authentification AUI émise par ladite entité réseau VLR.

Selon une variante de cet autre mode de réalisation de l'étape de création 200, l'étape de création 200 comporte une sous-étape 201 d'obtention d'une liste L de N identifiants XMSIi (i=1,...,N) d'usagers qui sont autorisés à accéder au système SYST via la station de base BS2. La liste L est au préalable mémorisée dans une mémoire LM de la station de base BS2.

L'étape 201 est suivie d'une sous-étape 202 de comparaison entre l'identifiant XMSIc ainsi reçu et chaque identifiant XMSIi de la liste L. Dans le cas où l'identifiant XMSIc est identique à l'un des identifiants XMSIi de la liste L, l'étape 202 est suivie d'une étape 204 d'émission de l'information d'authentification AUI non modifiée vers la station mobile MS. Par contre, dans le cas où l'identifiant XMSIc est différent de chaque identifiant XMSIi de la liste L, l'étape 202 est suivie d'une sous-étape 203 de modification de l'information d'authentification AUI, elle-même suivie de l'étape 204 au cours de laquelle ladite information d'authentification AUI1 ainsi obtenue par modification de l'information d'authentification AUI est émise vers la station mobile MS.

Selon le mode de réalisation de de la présente invention, l'information d'authentification AUI est constituée d'un code d'authentification AUTN et d'un nombre aléatoire RAND comme expliqué précédemment. Au cours de la sous-étapc de modification 203, au moins l'une de ces deux composantes est alors modifiée. Par exemple, le code d'authentification AUTN est modifié ou le nombre aléatoire RAND est modifié. On peut également envisager qu'à la fois le code d'authentification AUTN et le nombre aléatoire RAND sont modifiés. On peut noter qu'afin d'éviter tout impact lié au fonctionnement connu du système de téléphonie SYST, il est nécessaire que la cause de rejet du défi émane de la station mobile MS qui rejète alors la station de base BS2. Pour cela, il est nécessaire que seule l'information d'authentification AUTN soit modifiée.

La modification apportée à une composante de l'information d'authentification AUI peut être de différente nature. Par exemple, lorsque le code d'authentification AUTN qui est, rappelons-le déterminé à partir du nombre de séquence SQN, du champs AMF et du code MAC, est modifié, la modification peut consister à modifier la valeur du numéro de séquence SQN ou ($SQN \oplus AK$) lorsque la clé d'anonymat AK est utilisée en lui rajoutant la valeur 1, ou à modifier le champs AMF ou à modifier le code MAC en modifiant le numéro de séquence SQN, le nombre aléatoire RAND ou le champs AMF.

On peut noter que selon un mode de réalisation de mise en oeuvre de ce procédé, toutes les étapes de ce procédé sont destinées à être exécutées par la station de base BS2.

Selon une variante de ce mode de réalisation, l'étape de création 200 est destinée à être exécutée par une autre entité réseau du système SYST telle que l'entité VLR ou toute autre entité réseau du système SYST autre que la station de base BS2.

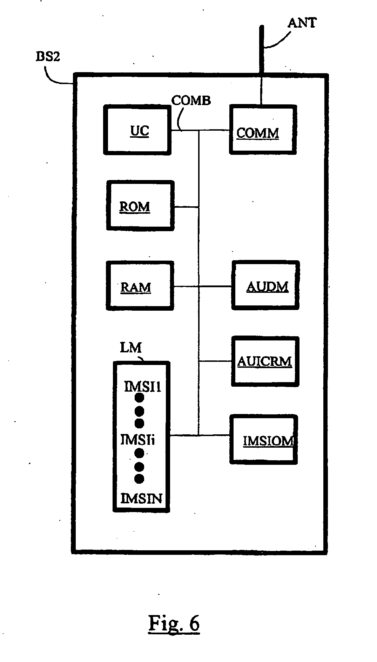

La Fig. 6 représente un schéma synoptique d'un mode de réalisation de la station de base BS2 mettant en oeuvre le procédé de contrôle d'accès décrit à la Fig. 5. La station de base BS2 comporte un bus de communication COMB auquel sont reliés une unité centrale UC, une mémoire non volatile ROM, une mémoire vive RAM, des moyens COMM de communication radio-fréquence et une antenne ANT.

La mémoire non volatile ROM mémorise les programmes mettant en oeuvre l'invention et plus particulièrement le procédé décrit en référence à la Fig. 5. La mémoire non volatile ROM est par exemple un disque dur. De manière plus générale, les programmes selon la présente invention sont mémorisés dans un moyen de stockage. Ce moyen de stockage est lisible par un ordinateur ou un microprocesseur. Ce moyen de stockage est intégré ou non à la station de base BS2, et peut être amovible. Lors de la mise sous tension de la station de base BS2, les programmes sont transférés dans la mémoire vive RAM qui contient alors le code exécutable de l'invention ainsi que les données nécessaires à la mise en oeuvre de l'invention.

Les moyens COMM de communication radiofréquence sont adaptés à transférer, d'une part, les signaux de messages reçus qui ont été émis par une entité réseau du système de téléphonie cellulaire mobile SYST et qui sont à destination de la station mobile MS et, d'autre part, les signaux de messages reçus qui ont été émis par la station mobile MS et qui sont à destination d'une entité réseau dudit système.

La station de base BS2 comporte également des moyens AUDM pour déterminer si un usager utilisant la station mobile MS est autorisé à accéder audit système via cette station de base BS2,

Selon ce mode de réalisation de la station de base BS2, chaque usager susceptible d'accéder au système SYST étant associé à un identifiant XMSIi, la station de base BS2 comporte des moyens IMSIOM pour obtenir l'identifiant XMSIc de l'usager utilisant la station mobile MS pour accéder au système SYST via cette station de base BS2.

Selon un premier mode de réalisation des moyens IMSIOM, l'identifiant XMSIc de l'usager utilisant la station mobile MS pour accéder au système SYST est obtenu suite à l'émission dudit identifiant XMSIc par la station mobile MS.

Selon un deuxième mode de réalisation des moyens IMSIOM, correspondant au cas où le numéro de séquence SQN de l'information d'authentification AUI comporte l'identifiant XMSIc, l'identifiant XMSIc est obtenu suite à l'émission de cette information d'authentification AUI par l'entité réseau VLR.

Selon un mode de réalisation des moyens AUDM, les moyens AUDM sont adaptés pour obtenir une liste L de N identifiants XMSIi (i=1,...,N) d'usagers qui sont autorisés à accéder au système SYST via la station de base BS2. La liste L est, par exemple, obtenue à partir d'une mémoire LM ou de tout autre support mémoire amovible d'une entité réseau du système SYST telle que par exemple la station de base BS2 ou l'entité réseau VLR. Les moyens AUDM sont également adaptés pour comparer l'identifiant XMSIc ainsi reçu et l'identifiant XMSIi de chaque identifiant d'usager de la liste L ainsi obtenue.

Selon ce mode de réalisation de la station de base BS2, la station de base BS2 comporte des moyens AUICRM pour créer une information d'authentification faussée AUI1 qui est définie, rappelons-le, afin de faire échouer ladite approche par défi dès lors que l'usager utilisant ladite station mobile MS pour accéder au système de téléphonie cellulaire mobile SYST n'est pas autorisé à le faire via la station de base BS2.

Selon un mode de réalisation des moyens AUICRM, les moyens AUICRM sont adaptés à créer l'information d'authentification faussée AUI1 indépendamment de l'information d'authentification AUI émise par l'entité réseau VLR.

Selon un autre mode de réalisation des moyens AUICRM, les moyens AUICRM sont adaptés à créer l'information d'authentification faussée AUI1 par modification de l'information d'authentification AUI reçue par la station de base BSE suite à son émission par l'entité réseau VLR. Selon un mode de réalisation des moyens de création AUICRM, l'information d'authentification AUI étant constituée d'un code d'authentification AUTN et d'un nombre aléatoire RAND, au moins l'une de ces deux composantes est modifiée par les moyens AUICRM. Par exemple, le code d'authentification AUTN est modifié ou le nombre aléatoire RAND est modifié. On peut également envisager qu'à la fois le code d'authentification AUTN et le nombre aléatoire RAND sont modifiés.

Selon un autre mode de réalisation de la présente invention, la création de l'information d'authentification AUI1 est destinée à être mise en oeuvre par une entité réseau du système SYST autre que la station de base BS2. Par exemple, cette autre entité réseau est l'entité réseau VLR ou tout autre entité réseau intervenant dans l'échange de données entre l'entité réseau VLR et la station mobile MS.

Bien entendu, la présente invention n'est nullement limitée aux modes de réalisation décrits ici, mais englobe, bien au contraire, toute variante à la portée de l'homme du métier.

## Revendications

**1.** Procédé de contrôle de l'accès d'une station mobile (MS) à une station de base (BS2) dont la couverture définit une cellule (C2) d'un système de téléphonie cellulaire mobile du type où une approche, dite par défi, est utilisée pour assurer à ladite station mobile (MS) que ladite station de base (BS2) sous la couverture de laquelle elle se trouve appartient audit système, ladite approche par défi consistant au lancement d'un défi par une entité réseau dudit système, VLR, vers ladite station mobile (MS), ledit défi étant pour ladite station mobile de calculer un résultat, RES, dit supposé du défi, à partir d'une information, AUI, dite d'authentification, émise par ladite entité réseau, VLR, et d'une information, K', dite secrète, connue au préalable par ladite station mobile (MS), ledit défi étant réussi par ladite station mobile (MS) lorsque le résultat supposé du défi, RES, est identique au résultat du défi, XRES, calculé par une entité réseau, HLR, dudit système à partir de ladite information d'authentification, AUD, et d'une information secrète, K, connue au préalable de ladite entité réseau, HLR, responsable du calcul dudit résultat du défi, ledit procédé est **caractérisé en ce qu'**il comporte en outre une étape (200) de création au cours de ladite approche par défi d'une information d'authentification, AUI1, dite faussée qui est définie afin de faire échouer ladite approche par défi dès lors que l'usager utilisant ladite station mobile (MS) pour accéder au système de téléphonie cellulaire mobile n'est pas autorisé à le faire via ladite station de base (BS2).

2. Procédé de contrôle de l'accès d'une station mobile (MS) à une station de base (BS2) selon la revendication 1, un identifiant unique, XMSIi, étant associé à chaque usager susceptible d'accéder à ladite station de base (BS2) **caractérisé en ce qu'**il comporte une étape (100), préalable à ladite étape de création (200), d'obtention de l'identifiant de l'usager, XMSIc, utilisant ladite station mobile (MS) pour accéder audit système via ladite station de base (BS2).

3. Procédé de contrôle de l'accès d'une station mobile (MS) à une station de base (BS2) selon la revendication 2, **caractérisé en ce que** l'identifiant dudit usager, XMSIc, est obtenu suite à l'émission par ladite station mobile (MS) d'une requête d'exécution de ladite approche par défi.

4. Procédé de contrôle de l'accès d'une station mobile (MS) à une station de base (BS2) selon la revendication 2, **caractérisé en ce que** l'identifiant dudit usager. XMSIc, est obtenu suite à l'émission par ladite entité réseau, VLR, d'une information d'authentification, AUI.

5. Procédé de contrôle de l'accès d'une station mobile (MS) à une station de base (BS2) selon l'une des revendications 1 à 4, **caractérisée en ce qu'**au cours de ladite étape de création (200) de ladite information d'authentification faussée, AUI1, ladite information d'authentification faussée, AUI1, est créée indépendamment de l'information d'authentification, AUI, émise par ladite entité réseau, VLR.

6. Procédé de contrôle de l'accès d'une station mobile (MS) à une station de base (BS2) selon l'une des revendications 1 à 4, **caractérisée en ce qu'**au cours de ladite étape de création (200) de ladite information d'authentification faussée, AUI1, ladite information d'authentification faussée, AUI1, est créée par modification de l'information d'authentification, AUI, émise par ladite entité réseau, VLR.

7. Procédé de contrôle de l'accès d'une station mobile (MS) à une station de base (BS2) selon la revendication 6, un identifiant unique, XMSIi, étant associé à chaque usager susceptible d'accéder à ladite station de base (RS2), **caractérisé en ce que** ladite étape de création (200) comporte :

- une sous-étape (201) d'obtention d'une liste, L, d'identifiants, XMSIi, des usagers qui sont autorisés à accéder au système de téléphonie via ladite station de base,
- une sous-étape (202) de comparaison entre l'identifiant de l'usager, XMSIc, ainsi reçu et chaque identifiant, XMSIi, ladite liste, L,
- dans le cas où l'identifiant de l'usager, XMSIc, ainsi reçu serait différent de chacun des identifiants, XMSIi, de ladite liste, une sous-étape (203) de modification de ladite information d'authentification, AUI, émise par ladite entité réseau, VLR.

8. Procédé de contrôle de l'accès d'une station mobile (MS) à une station de base (BS2) selon la revendication 6 ou 7, ladite information d'authentification, AUI, émise par ladite entité réseau, VLR, étant constituée d'au moins deux composantes, au cours de ladite sous-étape de modification au moins l'une desdites composantes est modifiée.

9. Procédé de contrôle de l'accès d'une station mobile (MS) à une station de base (BS2) selon l'une des revendications 1 à 8, **caractérisé en ce que** l'une des composantes de ladite information d'authentification, AUI, émise par ladite entité réseau, VLR, est un code d'authentification et une autre des composantes de ladite information d'authentification, AUI, est un nombre aléatoire, RAND.

10. Station de base d'un système de téléphonie cellulaire mobile du type où une approche, dite par défi, est utilisée pour assurer à ladite station mobile (MS) que ladite station de base sous la couverture de laquelle elle se trouve appartient audit système, ladite approche par défi consistant au lancement d'un défi par une entité réseau dudit système, VLR, vers ladite station mobile (MS), ledit défi étant pour ladite station mobile de calculer un résultat, RES, dit supposé du défi, à partir d'une information AUI, dite d'authentification, émise par ladite entité réseau, VLR, d'une information, K', dite secrète, connue au préalable par ladite station mobile (MS), ledit défi étant réussi par ladite station mobile (MS) lorsque le résultat supposé du défi RES, est identique au résultat du défi, XRES, calculé par une entité réseau, HLR, dudit système à partir de ladite information d'authentification, AUI, et d'une information secrète K connue au préalable de ladite entité réseau, HLR, responsable du calcul dudit résultat du défi,
ladite station de base est **caractérisée en ce qu'**elle comporte

- des moyens, COMM, de communication radiofréquence qui sont adaptés à transférer, d'une part, les signaux de messages reçus qui ont été émis par une entité réseau du système de téléphonie cellulaire mobile et qui sont à destination de ladite station mobile (MS) et, d'autre part, les signaux de messages reçus qui ont été émis par ladite station mobile (MS) et qui sont à destination d'une entité réseau dudit système, et
- des moyens, AUDM, pour déterminer si un usager utilisant ladite station mobile (MS) est autorisé à accéder audit système via ladite station de base.

11. Station de base selon la revendication 10, chaque usager susceptible d'accéder au système étant associé à un identifiant, XMSIi, **caractérisée en ce qu'**elle comporte des moyens, IMSIOM, pour obtenir l'identifiant, XMSIC, de l'usager utilisant ladite station mobile (MS) pour accéder au système via ladite station de base.

12. Station de base selon la revendication 11, **caractérisée en ce que** l'identifiant, XMSIc, l'usager utilisant la station mobile (MS) pour accéder au système est obtenu suite à l'émission dudit identifiant, XMSIc, par la station mobile (MS).

13. Station de base selon la revendication 11, l'information d'authentification comportant l'identifiant dudit usage, XMSIc, l'identifiant dudit usager, XMSIc, est obtenu suite à l'émission d'une information d'authentification, AUI, par ladite entité réseau VLR.

14. Station de base selon l'une des revendications 11 à 13, **caractérisée en ce que** lesdits moyens, AUDM pour déterminer si un usager est autorisé à accéder audit système sont adaptés, d'une part, pour obtenir une liste, L, de N identifiants, XMSIi, d'usagers qui sont autorisés à accéder audit système via ladite station de base et, d'autre part, pour comparer l'identifiant dudit usager, XMSIc, ainsi reçu et l'identifiant, XMSIi, de chaque usager de la liste L ainsi obtenue.

15. Station de base selon l'une des revendications 10 à 14, **caractérisée en ce qu'**elle comporte des moyens AUICRM, pour créer une information d'authentification, AUI1, dite faussée, qui est définie afin de faire échouer ladite approche par défi dès lors que l'usager utilisant ladite station mobile (MS) pour accéder au système de téléphonie cellulaire mobile n'est pas autorisé à le faire via ladite station de base.

16. Station de base selon la revendication 15, **caractérisée en ce que** lesdits moyens, AUICRM, pour créer ladite information d'authentification faussée sont adaptés à créer ladite information d'authentification faussée, AUI1, indépendamment de l'information d'authentification, AUI, émise par ladite entité réseau VLR.

17. Station de base selon la revendication 15, **caracté-**

**risée en ce que** lesdits moyens, AUICRM, pour créer ladite information d'authentification faussée sont adaptés à créer ladite information d'authentification faussée, AUI1, par modification de l'information d'authentification, AUI, reçue par ladite station de base suite à son émission par ladite entité réseau, VLR.

18. Station de base selon la revendication 17, l'information d'authentification, AUI, étant constituée d'au moins deux composantes, **caractérisée en ce que** lesdits moyens pour créer, AUICRM, sont adaptés à modifier au moins l'une de ces deux composantes.

19. Système de téléphonie cellulaire mobile du type où une approche, dit par défi, est utilisée pour assurer à une station mobile (MS) dudit système qu'une station de base (BS2) dudit système sous la couverture de laquelle elle se trouve appartient audit système, ladite approche par défi consistant au lancement d'un défi par une entité réseau dudit système, VLR, vers ladite station mobile (MS), ledit défi étant pour ladite station mobile (MS) de calculer un résultat, RES, dit supposé du défi, à partir d'une information, AUI, dite d'authentification, émise par ladite entité réseau, VLR, et d'une information K' dite secrète, connue au préalable par ladite station mobile (MS), ledit défi étant réussi par ladite station mobile (MS) lorsque le résultat supposé du défi, RES, est identique au résultat du défi, XRES, calculé par ladite station, de bas (BS2) à partir de ladite information d'authentificafion, AUI, et d'une information K secrète connue au préalable de ladite station de base (BS2) ledit système est **caractérisé en ce que** ladite station de base (BS2) qui définit pour partie la couverture cellulaire dudit système comporte des moyens qui sont conformes à l'une des revendications 10 à 14.

20. Système de téléphonie cellulaire mobile selon la revendication 19, **caractérisé en ce qu'**une entité réseau dudit système autre que ladite station de base (BS2) comporte des moyens AUICRM, pour créer une information d'authentification, AUI1, dite faussée, qui est définie afin de faire échouer ladite approche par défi dès lors que l'usager utilisant ladite station mobile (MS) pour accéder au système de téléphonie cellulaire mobile n'est pas autorisé à le faire via ladite station de base.

21. Système de téléphonie cellulaire mobile selon la revendication 19, **caractérisé en ce que** ladite station de base comporte des moyens qui sont conformes à l'une des revendications 15 à 18.

22. Programme d'ordinateur stocké sur un support d'informations, **caractérisé en ce qu'**il comporte des instructions permettant de mettre en oeuvre le procécé selon l'une des revendications 1 à 9, lorsqu'il est exécuté par une station de base d'un système de téléphonie cellulaire mobile.

## Claims

1. Method for controlling the access of a mobile station (MS) to a base station (BS2) the coverage of which defines a cell (C2) of a cellular mobile telephone system of the type in which an approach, termed a challenge approach, is used to assure said mobile station (MS) that said base station (BS2) under whose coverage it falls belongs to said system, said challenge approach consisting in the launching of a challenge by a network entity of said system, VL,R, to said mobile station (MS), said challenge being for said mobile station to calculate a result, RES, supposed to be from the challenge, from a data item, AUI, referred to as an authenticating data item, sent by said network entity, VLR, and a data item, K', termed a secret data item, known beforehand by said mobile station (MS), said challenge being successful for said mobile station (MS) when the supposed result of the challenge, RES, is identical to the result of the challenge, XRES, calculated by a network entity, HLR, of said system from said authenticating data item, AUI, and a secret data item, K, known beforehand by said network entity, HLR, responsible for the calculation of said result of the challenge, said method being **characterised in that** it further comprises a step (200) of creating, in the course of said challenge approach, an authenticating data item, AUI1, referred to as a distorted authenticating data item, which is defined so as to cause said challenge approach to fail when the user using said mobile station (MS) to access the cellular mobile telephone system is not authorised to do so via said base station (BS2).

2. Method for controlling the access of a mobile station (MS) to a base station (BS2) according to claim 1, a single identifier, XMSIi, being associated with each user likely to access said base station (BS2), **characterised in that** it comprises a step (100), prior to said creation step (200), of obtaining the identifier of the user, XMSIc, using said mobile station (MS) to access said system via said base station (BS2).

3. Method for controlling the access of a mobile station (MS) to a base station (BS2) according to claim 2, **characterised in that** the identifier of said user, XMSIc, is obtained following the sending by said mobile station (MS) of a request to execute said challenge approach.

4. Method for controlling the access of a mobile station (MS) to a base station (BS2) according to claim 2, **characterised in that** the identifier of said user, XMSIc, is obtained following the sending by said network entity, VLR, of an authenticating data item, AUI.

5. Method for controlling the access of a mobile station (MS) to a base station (BS2) according to one of claims 1 to 4, **characterised in that** in the course of said step (200) of creating said distorted authenticating data item, AUI1, the said distorted authenticating data item, AUI1, is created independently of the authenticating data item, AUI, sent by said network entity, VLR.

6. Method for controlling the access of a mobile station (MS) to a base station (BS2) according to one of claims 1 to 4, **characterised in that** in the course of said step (200) of creating said distorted authenticating data item, AUI1, the said distorted authenticating data item, AUI1, is created by modifying the authenticating data item, AUI, sent by said network entity, VLR.

7. Method for controlling the access of a mobile station (MS) to a base station (BS2) according to claim 6, a unique identifier, XMSIi, being associated with each user capable of accessing said base station (BS2), **characterised in that** said creating step (200) comprises:

- a sub-step (201) of obtaining a list, L, of identifiers, XMSIi, of the users who are authorised to access the telephone system via said base station,
- a sub-step (202) of comparison between the identifier of the user, XMSIc, thus received and each identifier, XMSIi, on said list, L,
- in the event that the identifier of the user, XMSIc, thus received is different from each of the identifiers, XMSIi, on said list, a sub-step (203) of modifying said authenticating data item, AUI, sent by said network entity, VLR.

8. Method for controlling the access of a mobile station (MS) to a base station (BS2) according to claim 6 or 7, the said authenticating data item, AUI, sent by said network entity, VLR, being made up of at least two components, in the course of said modification sub-step at least one of said components is modified.

9. Method for controlling the access of a mobile station (MS) to a base station (BS2) according to one of claims 1 to 8, **characterised in that** one of the components of said authenticating data item, AUI, sent by said network entity, VLR, is an authentication code and another of the components of said authenticating data item, AUI, is a random number, RAND.

10. Base station of a cellular mobile telephone system of the type in which an approach, known as a challenge approach, is used to assure said mobile station (MS) that said base station under whose coverage it falls belongs to said system, said challenge approach consisting in the launching of a challenge by a network entity of said system, VLR, to said mobile station (MS), said challenge being for said mobile station to calculate a result, RES, supposed to be the result of the challenge, from a data item, AUI, known as an authenticating data item, sent by said network entity, VLR, and a data item, K', termed a secret data item, known beforehand by said mobile station (MS), said challenge being successful for said mobile station (MS) when the supposed result of the challenge, RES, is identical to the result of the challenge, XRES, calculated by a network entity, HLR, of said system from said authenticating data item, AUI, and a secret data item, K, known beforehand by said network entity, HLR, responsible for the calculation of said result of the challenge, said base station being **characterised in that** it comprises

- radio-frequency communication means, COMM, which are adapted to transfer, on the one hand, the signals of messages received which have been sent by a network entity of the cellular mobile telephone system and which are destined for said mobile station (MS) and, on the other hand, the signals of messages received which have been sent by said mobile station (MS) and which are destined for a network entity of said system, and
- means, AUDM, for determining whether a user using said mobile station (MS) is authorised to access said system via said base station.

11. Base station according to claim 10, each user capable of accessing the system being associated with an identifier, XMSIi, **characterised in that** it comprises means, IMSIOM, for obtaining the identifier, XMSIc, of the user using said mobile station (MS) to access the system via said base station;

12. Base station according to claim 11, **characterised in that** the identifier, XMSIc, of the user using the mobile station (MS) to access the system is obtained following the sending of said identifier, XMSIc, by the mobile station (MS).

13. Base station according to claim 11, the authenticating data item comprising the identifier of said user, XMSIc, the identifier of said user, XMSIc, is obtained following the sending of an authenticating data item, AUI, by said network entity VLR.

14. Base station according to one of claims 11 to 13, **characterised in that** said means, AUDM, for determining whether a user is authorised to access said system are adapted, on the one hand, to obtain a list, L, of N identifiers, XMSIi, of users who are authorised to access said system via said base station and, on the other hand, to compare the identifier of said user, XMSIc, thus received and the identifier, XMSIi, of each user on the list L thus obtained.

15. Base station according to one of claims 10 to 14, **characterised in that** it comprises means, AUICRM, for creating an authenticating data item, AUII, known as the distorted authenticating data item, which is defined so as to cause said challenge approach to fail when the user using said mobile station (MS) to access the cellular mobile telephone system is not authorised to do so via said base station.

16. Base station according to claim 15, **characterised in that** said means, AUICRM, for creating said distorted authenticating data item are adapted to create said distorted authenticating data item, AUI1, independently of the authenticating data item, AUI, sent by said network entity VLR.

17. Base station according to claim 15, **characterised in that** said means, AUICRM, for creating said distorted authenticating data item are adapted to create said distorted authenticating data item, AUI1, by modifying the authenticating data item, AUI, received by said base station following its sending by said network entity, VLR.

18. Base station according to claim 17, the authenticating data item, AUI, being made up of at least two components, **characterised in that** the said creating means, AUICRM, are adapted to modify at least one of these two components.

19. Mobile cellular telephone system of the type in which an approach, termed a challenge approach, is used to assure a mobile station (MS) of the system that a base station (BS2) of the system under whose coverage it falls belongs to said system, said challenge approach consisting in the launching of a challenge by a network entity of said system, VLR, to said mobile station (MS), said challenge being for said mobile station (MS) to calculate a result, RES, supposed to be the result of the challenge, from a data item, AUI, referred to as an authenticating data item, sent by said network entity, VLR, and a data item, K', termed a secret data item, known beforehand by said mobile station (MS), said challenge being successful for said mobile station (MS) when the supposed result of the challenge, RES, is identical to the result of the challenge, XRES, calculated by said base station (BS2) from said authenticating data item, AUI, and a secret data item, K, known beforehand by said base station (BS2), said system being **character-**

**ised in that** said base station (BS2) which partly defines the cellular coverage of said system comprises means according to one of claims 10 to 14.

20. Mobile cellular telephone system according to claim 19, **characterised in that** a network entity of said system other than said base station (BS2) comprises means, AUICRM, for creating an authenticating data item, AUI1, termed a distorted authenticating data item, which is defined so as to cause said challenge approach to fail when the user using said mobile station (MS) to access the cellular mobile telephone system is not authorised to do so via said base station.

21. Mobile cellular telephone system according to claim 19, **characterised in that** said base station comprises means according to one of claims 15 to 18.

22. Computer program stored on a data carrier, **characterised in that** it comprises instructions for carrying out the method according to one of claims 1 to 9, when it is run by a base station of a cellular mobile telephone system.

**Patentansprüche**

1. Verfahren zur Zugriffssteuerung einer mobilen Station (MS) auf eine Basisstation (BS2), deren Abdeckung eine Zelle (C2) eines Mobilfunktelefonsystems definiert, wobei es sich bei dem Verfahren um ein solches handelt, bei dem eine Kontaktaufnahme durch eine Aufforderung dazu verwendet wird, um der mobilen Station (MS) zu gewährleisten, dass die Basisstation (BS2), unter deren Abdeckung sie sich befindet, dem System zugehörig ist, wobei die Kontaktaufnahme durch Aufforderung aus dem Absenden einer Aufforderung durch eine Netzeinheit, VLR, des Systems an die mobile Station (MS) besteht, wobei die Aufforderung für die mobile Station (MS) darin besteht, ausgehend von einer Authentifikationsinformation, AUI, die von der Netzeinheit, VLR, ausgesendet wird, sowie einer geheimen Information, K', die der mobilen Station (MS) vorab bekannt ist, ein vermutetes Resultat der Aufforderung, RES, zu berechnen, wobei die Aufforderung als von der mobilen Station (MS) bestanden gilt, wenn das vermutete Resultat der Aufforderung, RES, mit dem Resultat der Aufforderung, XRES, das von einer Netzeinheit, HLR, des Systems ausgehend von der Authentifikationsinformation, AUI, und einer geheimen Information, K, die der für die Berechnung des Resultats der Aufforderung zuständigen Netzeinheit, HLR, von vornherein bekannt ist, identisch ist, wobei das Verfahren **dadurch gekennzeichnet ist, dass** es unter anderem während der Kontaktaufnahme durch Aufforderung einen Verfahrensschritt (200) zur Erzeugung einer gefälschten Authentifikationsinformation, AUI1, umfasst, die dazu definiert wird, um die Kontaktaufnahme durch Aufforderung fehlschlagen zu lassen, falls der Benutzer, der die mobile Station (MS) dazu verwendet, um Zugriff auf das Mobilfunktelefonsystem zu erhalten, nicht dazu autorisiert ist, dies über die Basisstation (BS2) durchzuführen.

2. Verfahren zur Zugriffssteuerung einer mobilen Station (MS) auf eine Basisstation (BS2) nach Anspruch 1,
wobei jedem Benutzer, der dazu geeignet ist, auf die Basisstation (BS2) zuzugreifen, eine eindeutige Identifikation, XMSli, zugeordnet ist,
**dadurch gekennzeichnet, dass**
das Verfahren vor dem Verfahrensschritt der Erzeugung (200) einen Verfahrensschritt (100) umfasst, in dem die Identifikation des Benutzers, XMSic, der die mobile Station (MS) zum Zugriff auf das System über die Basisstation (BS2) verwendet, erfasst wird.

3. Verfahren zur Zugriffssteuerung einer mobilen Station (MS) auf eine Basisstation (BS2) nach Anspruch 2,
**dadurch gekennzeichnet, dass**
die Identifikation des Benutzers, XMSIc, im Anschluss an das Absenden einer Anfrage der mobilen Station (MS) zum Ausführen der Kontaktaufnahme durch Aufforderung erhalten wird.

4. Verfahren zur Zugriffssteuerung einer mobilen Station (MS) auf eine Basisstation (BS2) nach Anspruch 2,
**dadurch gekennzeichnet, dass**
die Identifikation des Benutzers, XMSIc, nach dem Absenden einer Authentifikationsinformation, AUI, durch die Netzeinheit, VLR, erhalten wird.

5. Verfahren zur Zugriffssteuerung einer mobilen Station (MS) auf eine Basisstation (BS2) nach einem der Ansprüche 1 bis 4,
**dadurch gekennzeichnet, dass**
im Rahmen des Verfahrensschrittes der Erzeugung (200) der gefälschten Authentifikationsinformation, AUI1, die gefälschte Authentifikationsinformation, AUI1, unabhängig von der von der Netzeinheit, VLR, ausgesendeten Authentifikationsinformation, AUI, ist.

6. Verfahren zur Zugriffssteuerung einer mobilen Station (MS) auf eine Basisstation (BS2) nach einem der Ansprüche 1 bis 4,
**dadurch gekennzeichnet, dass**
im Rahmen des Verfahrensschrittes der Erzeugung (200) der gefälschten Authentifikationsinformation, AUI1, die gefälschte Authentifikationsinformation, AUI1, durch eine Modifikation der von der Netzeinheit, VLR, abgesendeten Authentifikationsinformation, AUI, erzeugt wird.

7. Verfahren zur Zugriffssteuerung einer mobilen Station (MS) auf eine Basisstation (BS2) nach Anspruch 6,
wobei jedem Benutzer der dazu geeignet ist, auf die Basisstation (BS2) zuzugreifen, eine eindeutige Identifikation, XMSIi, zugeordnet ist,
**dadurch gekennzeichnet, dass**
der Verfahrensschritt des Erzeugens (200) umfasst:

- einen Teilverfahrensschritt (201) des Erhaltens einer Liste, L, der Identifikationen, XMSIi, der Benutzer, die dazu berechtigt sind, über die Basisstation auf das Telefonsystem zuzugreifen,
- einen Teilverfahrensschritt (202) des Vergleichs zwischen der empfangenen Identifikation des Benutzers, XMSIc, und jeder Identifikation, XMSIi, der Liste, L,
- falls die empfangene Identifikation des Benutzers, XMSIc, sich von jeder Identifikation, XMSIi, der Liste unterscheidet, einen Teilverfahrensschritt (203) der Modifikation der von der Netzeinheit, VLR, ausgesendeten Authentifikationinformation, AUI1.

8. Verfahren zur Zugriffssteuerung einer mobilen Station (MS) auf eine Basisstation (BS2) nach einem der Ansprüche 6 oder 7,
wobei die von der Netzeinheit, VLR, ausgesendete Authentifikationsinformation, AUI, aus wenigstens zwei Bestandteilen zusammengesetzt ist, wobei in dem Teilverfahrensschritt der Modifikation wenigstens einer der Bestandteile modifiziert wird.

9. Verfahren zur Zugriffssteuerung einer mobilen Station (MS) auf eine Basisstation (BS2) nach einem der Ansprüche 1 bis 8,
**dadurch gekennzeichnet, dass**
es sich bei einem der Bestandteile der von der Netzeinheit, VLR, abgesendeten Authentifikationsinformation, AUI, um einen Authentifikationscode handelt und ein weiterer der Bestandteile der Authentifikationsinformation, AUI, eine Zufallszahl, RAND, ist.

10. Basisstation eines Mobilfunktelefonsystems, bei der eine so genannte Kontaktaufnahme durch Aufforderung dazu verwendet wird, um der mobilen Station (MS) zu gewährleisten, dass die Basisstation, unter deren Abdeckung sie sich befindet, dem System zugehörig ist, wobei die Kontaktaufnahme durch Aufforderung aus dem Absenden einer Aufforderung durch eine Netzeinheit, VLR, des Systems an die mobile Station (MS) besteht, wobei die Aufforderung für die mobile Station darin besteht, ausgehend von einer Authentifikationsinformation, AUI, die von der Netzeinheit, VLR, ausgesendet wird, sowie einer geheimen Information, K', die der mobilen Station (MS) vorab bekannt ist, ein vermutetes Resultat der Aufforderung, RES, zu berechnen,
wobei die Aufforderung als von der mobilen Station (MS) bestanden gilt, wenn das vermutete Resultat der Aufforderung, RES, mit dem Resultat der Aufforderung, XRES, das von einer Netzeinheit, HLR, des Systems ausgehend von der Authentifikiationsinformation, AUI, und einer geheimen Information, K, die der für die Berechnung des Resultats der Aufforderung zuständigen Netzeinheit, HLR, von vornherein bekannt ist, identisch ist,
wobei die Basisstation **dadurch gekennzeichnet ist, dass** sie umfasst:

- Mittel, COMM, zur Kommunikation auf Radiofrequenzen, die dazu ausgelegt sind, einerseits die empfangenen Mitteilungssignale, die von einer Netzeinheit des Mobilfunktelefonsystems ausgesendet wurden und die für die mobile Station (MS) bestimmt sind, und andererseits die empfangenen Mitteilungssignale, die von der mobilen Station (MS) abgesendet wurden und die für eine Netzeinheit des Systems bestimmt sind, zu übermitteln, und
- Mittel, AUDM, um festzulegen, ob ein Benutzer, der die mobile Station (MS) verwendet, dazu authorisiert ist, über die Basisstation auf das System zuzugreifen.

11. Basisstation nach Anspruch 10,
wobei jedem Benutzer, der dazu geeignet ist, auf das System zuzugreifen, eine Identifikation, XMSIi, zugeordnet ist,
**dadurch gekennzeichnet, dass**
sie Mittel, IMSIOM, umfasst, um die Identifikation, XMSIc, des Benutzers zu erhalten, der die mobile Station (MS) zum Zugriff auf das System über die Basisstation verwendet.

12. Basisstation nach Anspruch 11,
**dadurch gekennzeichnet, dass**
die Identifikation, XMSIc, des Benutzers, der die mobile Station (MS) zum Zugriff auf das System verwendet, im Anschluss auf das Absenden der Identifikation, XMSIc, durch die mobile Station (MS) erhalten wird.

13. Basisstation nach Anspruch 11,
wobei die Authentifikationsinformation, die die Identifikation, XMSIc, des Benutzers umfasst, im Anschluss an das Absenden einer Authentifikationsinformation, AUI, durch die Netzeinheit, VLR, erhalten wird.

14. Basisstation nach einem der Ansprüche 11 bis 13,
**dadurch gekennzeichnet, dass**

die Mittel, AUDM, zur Überprüfung, ob ein Benutzer zum Zugriff des Systems berechtigt ist, dazu ausgelegt sind, zum einen eine Liste, L, von Identifikationen, XMSIi, von Benutzern, die zum Zugriff auf das System über die Basisstation authorisiert sind, zu erhalten und zum anderen die erhaltene Identifikation des Benutzers, XMSIc, mit der Identifikation, XMSIi, jedes Benutzers der auf diese Weise erhaltenen Liste, L, zu vergleichen.

15. Basisstation nach einem der Ansprüche 10 bis 14, **dadurch gekennzeichnet, dass** sie Mittel, AUICRM, umfasst, um eine gefälschte Authentifikationsinformation, AUI1, zu erzeugen, die definiert wird, um die Kontaktaufnahme durch Aufforderung fehlschlagen zu lassen, wenn der Benutzer, der die mobile Station (MS) zum Zugriff auf das Mobilfunktelefonsystem verwendet, nicht dazu authorisiert ist, dies über die Basisstation durchzuführen.

16. Basisstation nach Anspruch 15, **dadurch gekennzeichnet, dass** die Mittel, AUICRM, zum Erzeugen der gefälschten Authentifikationsinformation dazu ausgelegt sind, die gefälschte Authentifikationsinformation, AUI1, unabhängig von der von der Netzeinheit, VLR, abgesendeten Authentifikationsinformation, AUI, zu erzeugen.

17. Basisstation nach Anspruch 15, **dadurch gekennzeichnet, dass** die Mittel, AUICRM, zum Erzeugen der gefälschten Authentifikationsinformation dazu ausgelegt sind, die gefälschte Authentifikationsinformation, AUI1, durch eine Modifikation der von der Basisstation nach dem Absenden durch die Netzeinheit, VLR, erhaltenen Authentifikationsinformation, AUI, zu erzeugen.

18. Basisstation nach Anspruch 17, wobei die Authentifikationsinformation, AUI1, aus wenigstens zwei Bestandteilen zusammengesetzt ist, **dadurch gekennzeichnet, dass** die Mittel, AUICRM, zum Erzeugen dazu ausgelegt sind, wenigstens einen der beiden Bestandteile zu modifizieren.

19. Mobilfunktelefonsystem, bei dem eine Kontaktaufnahme durch Aufforderung dazu verwendet wird, einer mobilen Station (MS) des Systems zu gewährleisten, dass eine Basisstation (BS2) des Systems, unter derer Abdeckung sie sich befindet, dem System zugehörig ist, wobei die Kontaktaufnahme durch Aufforderung aus dem Absenden einer Aufforderung durch eine Netzeinheit, VLR, des Systems an die mobile Station (MS) besteht,

wobei die Aufforderung für die mobile Station darin besteht, ausgehend von einer Authentifikationsinformation, AUI, die von der Netzeinheit, VLR, ausgesendet wird, sowie einer geheimen Information, K', die der mobilen Station (MS) vorab bekannt ist, ein vermutetes Resultat, der Aufforderung, RES, zu berechnen, wobei die Aufforderung als von der mobilen Station (MS) bestanden gilt, wenn das vermutete Resultat der Aufforderung, RES, mit dem Resultat der Aufforderung, XRES, das von einer Netzeinheit, HLR, des Systems ausgehend von der Authentifikationsinformation, AUI, und einer geheimen Information, K, die der für die Berechnung des Resultats der Aufforderung zuständigen Netzeinheit, HLR, von vornherein bekannt ist, identisch ist,

wobei das System **dadurch gekennzeichnet ist, dass** die Basisstation (BS2), die einen Teil der zellulären Abdeckung des Systems bildet, Mittel gemäß einem der Ansprüche 10 bis 14 umfasst.

20. Mobilfunktelefonsystem nach Anspruch 19, **dadurch gekennzeichnet, dass** eine von der Basisstation (BS2) verschiedene Netzeinheit des Systems Mittel, AUICRM, zum Erzeugen einer gefälschten Authentifikationsinformation, AUI1, umfasst, die dazu definiert wird, die Kontaktaufnahme durch Aufforderung fehlschlagen zu lassen, falls der Benutzer, der die mobile Station (MS) zum Zugriff auf das Mobilfunktelefonsystem verwendet, nicht dazu authorisiert ist, dies über die Basisstation durchzuführen.

21. Mobilfunktelefonsystem nach Anspruch 19, **dadurch gekennzeichnet, dass** die Basisstation Mittel gemäß einem der Ansprüche 15 bis 18 umfasst.

22. Auf einem Datenträger gespeichertes Computerprogramm, **dadurch gekennzeichnet, dass** das Computerprogramm Anweisungen umfasst, die ein Ausführen des Verfahrens nach einem der Ansprüche 1 bis 9 ermöglichen, wenn es von einer Basisstation eines Mobilfunktelefonsystems ausgeführt wird.

MS

BS1

BS2

C1

C2

XMSIc
K'

USIM

XMSIc
K

HLR

VLR

FIFO

AV
AV

Fig. 1

MS              VLR             HLR

1: requête vecteur AV    2: génération
vecteur AV

4: mémorisation    3: envoi vecteurs AV (AUI,XRES)
dans pile FIFO

5: requête d'authentification

7: détermination    6: émission de AUI
RES

8: émission RES
            9: omparaison RES/XRES

## Fig. 2

AV

AUI

AUTN        RAND        XRES

## Fig. 3

génération AMF   génération SQN   génération RAND

AMF

SQN

⊕   AK   f5

K   f2

MAC   f1   XRES

RAND

AUTN

Fig. 4

début

Obtention IMSIc   100

obtenton liste L
d'identifiants IMSi   201

200

oui   IMSIc=IMSIi (i=1 àN) ?   202

non

modification AUI   203

émission AUI1   204

fin

Fig. 5

Fig. 6

**RÉFÉRENCES CITÉES DANS LA DESCRIPTION**

**Documents brevets cités dans la description**

- WO 9849855 A